# EUROPEAN PATENT APPLICATION

(11) **EP 1 130 890 A2**
(43) Date of publication of application: **05.09.2001**
(21) Application number: 01104801.4
(22) Date of filing: 27.02.2001
(51) Int. Cl.: H04M 1/725, H04M 1/247

(54) **Mobile telephone with electronic mail function**

(30) Priority: 29.02.2000 JP 2000054914
(71) Applicant: Matsushita Electric Industrial Co., Ltd., Kadoma-shi, Osaka (JP)
(72) Inventor: Ishigaki, Junji, Hachioji-shi, Tokyo (JP)
(74) Representative: Grünecker, Kinkeldey, Stockmair & Schwanhäusser Anwaltssozietät

(57) **Abstract**

Only by pushing a browser function key (warp key) 8 in a state where a telephone directory is used to call up an object person, a mail address which has been registered in the telephone directory can be called up, and a switching to mail creation mode can be effected. This can save a trouble of inputting each time the address to which the mail is dispatched, and creation and dispatch of the new mail can be simplified.

## Description

### BRIEF DESCRIPTION OF THE PREFERRED EMBODIMENTS

The present invention relates to a mobile telephone having a function of non-voice information communicating mode (information mode, so called as "i-mode" for example), and more particularly to the mobile telephone constructed so that a switching to a mail creation mode can be effected by simple key operations. The non-voice information communicating mode is an operation mode of on line data service employing a digital mobile telephone, by means of which site (contents) connecting service, internet connecting service, message service, i-mode mail, etc. can be utilized.

Conventionally, in order to prepare a mail in a mobile telephone having the function of the non-voice information communicating mode (i-mode, for example), an icon of "mail" is selected on an icon screen to call up a "mail screen". Then, "new mail creation" is selected on the mail screen. The new mail creation screen is divided into creation screens for mail text creation, address creation, and title creation in order. These creation screens are sequentially selected, and the mail is created to complete a transmittable mail.

In case of creating an address of the mail in the mobile telephone having the function of the non-voice information communicating mode (i-mode, for example), there has been conventionally known a system in which mail addresses registered in a telephone directory is used. In other words, the mail addresses are registered in the telephone directory beforehand. When the mail address creation screen is displayed, a left soft key is pushed to indicate a function menu. Then, the telephone directory is selected, and the telephone directory is called up by means of a navigation decision key. On the telephone directory screen, the registered mail addresses are displayed. When the mail address to be inputted as the destination address is displayed, the navigation decision key is pushed to determine the mail address.

As described above, in the mobile telephone having the function of the non-voice information communicatingmode (i-mode, for example), if the mail address has been registered in a note column of the telephone directory, the destination address of the mail can be determined utilizing the registered mail address. However, there has been a problem that creation of the mail cannot be conducted easily, because the mail address cannot be called up directly from the screen indicating names and telephone numbers.

### SUMMARY OF THE INVENTION

The invention has been made in order to solve such problem, and it is an object of the invention to provide a mobile telephone in which new mail creation can be conducted by simple key operations when a telephone directory screen is displayed.

According to the invention, a mobile telephone comprises a telephone directory in which mail addresses are registered, and a browser function key, in that by pushing the browser function key when a telephone directory screen is displayed by selecting the telephone directory, a switching to mail creation mode is conducted. With this structure, the switching to the new mail creation mode can be quickly made through another step besides a step of selecting the "mail" on the icon screen to display "the mail screen".

Further, the browser function key may be a warp (jump) key adapted to jump to non voice information communicating mode. With this structure, the transition to the new mail creation mode can be made by simple key operations.

### BRIEF DESCRIPTION OF THE DRAWINGS

Fig. 1 is a front view showing a structure of a mobile telephone according to an embodiment of the invention;
Fig. 2 is a diagram showing circuit blocks for realizing the mobile telephone of Fig. 1;
Fig. 3 show an example of an icon screen displayed during a waiting period on a display section of the mobile telephone of Fig. 1;
Fig. 4 is a view showing transitions of the displayed screens of the mobile telephone for explaining the embodiment of the invention;
Fig. 5 shows a data structure of the telephone directory; and
Fig. 6 is a flow chart for explaining operations for effecting the transition to a new mail creation mode by pushing a browser function key;

### DETAILED DESCRIPTION OF THE PREFERRED EMBODIMENTS

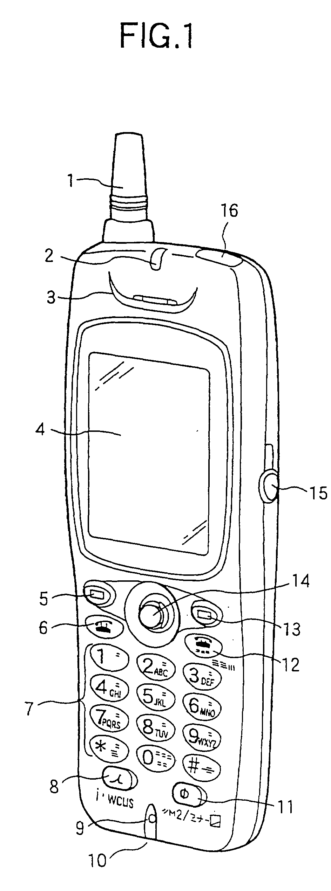

Now, mode for carrying out the invention will be described referring to Figs. 1 to 6.

Fig. 1 is a schematic view showing a structure of a mobile telephone having a function of non-voice information communicating mode (i-mode, for example) according to one embodiment of the invention. In Fig. 1, the mobile telephone according to the embodiment of the invention is designed to have an antenna 1, an incoming call/charging lamp 2, a receiver 3, a liquid crystal display 4, a left soft key 5 serving also as a telephone directory button, a conversation starting button 6, ten keys or dial keys 7, a warp (jump) key 8 for switching into the non-voice information communicating mode, a transmitter 9, an external connection terminal 10, a voice/manner key 11, a power/stop/hold key 12, a right soft key 13 serving also as a redial/clear button, a navigation key 14 which can select the displays in upward, downward, right and left directions having also a scroll function, and can determine the selection by pushing a center button, and an earphone microphone terminal 15, and an infrared port 16.

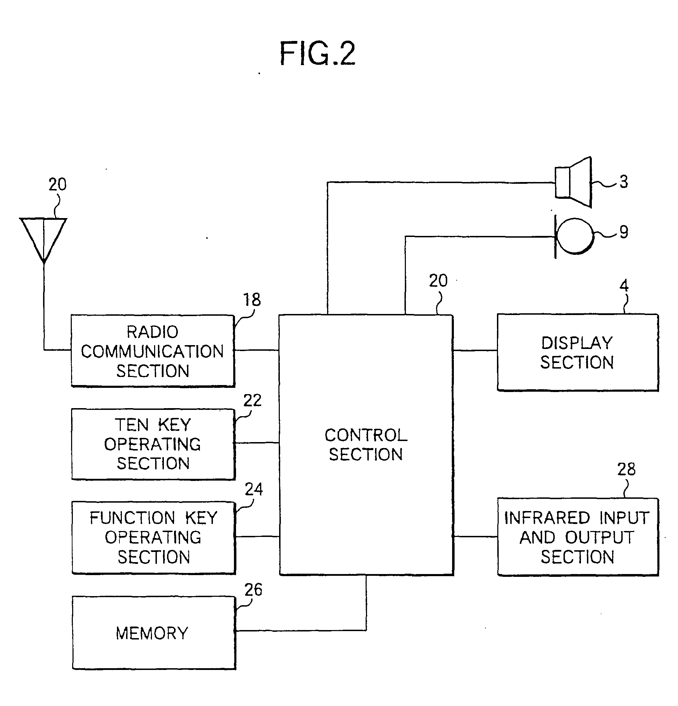

Fig. 2 is a diagram showing circuit blocks for realizing the mobile telephone having the above described structure. In the mobile telephone in Fig. 2, radio waves received by the antenna 1 is received at a receiving part (not shown) of a radio communication section 18, and the received information is transmitted to a control section 20. The control section 20 displays the received information such as a telephone number, on the display 4 such as a liquid crystal display unit.

The control section 20 converts the received information into a voice information and outputs by voice through a speaker (receiver) 3 of a receiving section. The transmitter (microphone) 9 receives a user's voice and transmit it by radio to a person on the other end of the line by way of a transmitting part (not shown) of the radio communication section 18 and the antenna 1. The control section 20 also controls a memory 26 to record the voice information such as the telephone conversation in progress, or to read out the recorded information. A ten key operating section 22 inputs dial signals or so into the control section 20 by operating the ten keys 7. A function key operating section 24 for operating other function keys than the ten keys acts to input an operation of the operated function key, for example, the navigation key 14 into the control section 20.

The memory 26 is adapted to register and read out the data in the telephone directory including the mail addresses by the operation of the ten keys 7. The control section 20 is so constructed as to control a switching to the mail creation mode, when the warp key 8 is pushed while the data of the telephone directory is displayed on the display section 4. Moreover, the infrared input and output section 28 conducts exchange of infrared signals by way of the infrared port 16. These circuit blocks are contained in a casing of Fig. 1.

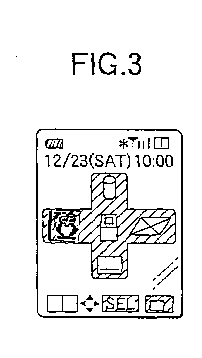

Fig. 3 shows an example of an icon screen which is displayed during a waiting period on a display section of the mobile telephone having the above described structure. In this example, the icon screen is displayed in a shape of a cross, including an i-mode icon, an i-mode mail icon, a telephone directory icon, and a screen icon, in clockwise and a menu icon at a center. A selected icon screen is adapted to be enlarged, and which icon screen has now been selected is shown.

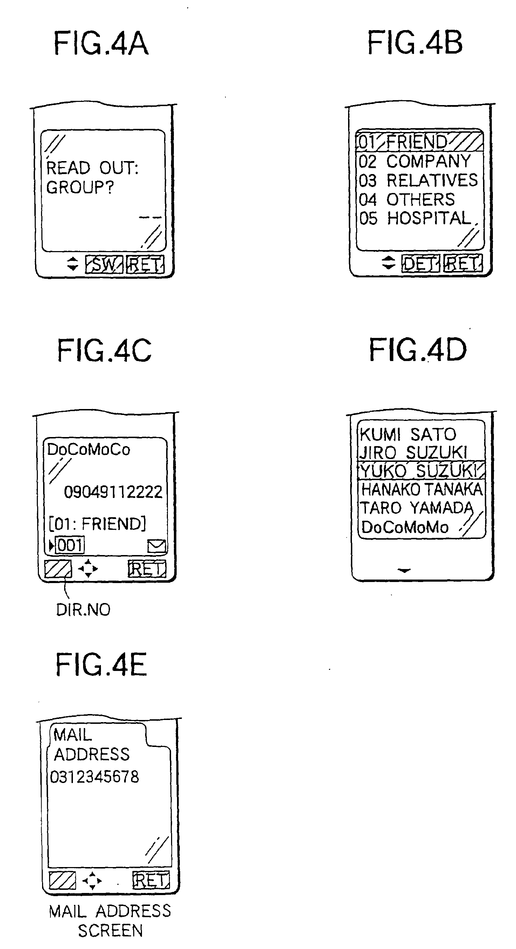

Figs. 4A to 4E show the transitions of the screens displayed on the mobile telephone for explanation of the mode for carrying out the invention.

Figs. 4A to 4D are transition views when making a telephone call by calling up the telephone directory, which is a usual utilization system of calling up the telephone directory. In short, in calling up the telephone directory through the icon screen or so, for example, the left soft key 5 is pushed and then, a navigation decision key of the navigation key 14 is pushed several times to display a group call up screen (Refer to Fig. 4A). Then, by operating the upward or downward scroll key of the navigation key to select an appropriate group number (Refer to Fig.4B).

When the group number to be called up is highlighted (In Fig. 4B, a group of "friends" of group No. 1 has been selected), the decision key of the navigation key 14 is pushed to indicate content of the telephone directory which has been registered in the group of "friends" (Refer to Fig. 4C).

Then, by continuously pressing the upward or downward scroll key of the navigation key 14, names registered in the group of "friends" are indicated in order (Refer to Fig. 4D). After once detaching a finger from the upward or downward scroll key of the navigation key 14, and highlighting the object name (Refer to Fig. 4D), the decision key of the navigation key 14 is pushed. Thus, the telephone directory of the finally selected name is displayed. Then, by operating the conversation starting key 6, the telephone call to the indicated person can be made.

In contrast, according to the invention, in a state where the telephone directory is used to call up the object person in such a manner as described above, that is, when the selected object name is indicated on the screen, by pushing the aforesaid browser function key (warp key) 8, the mail address which has been registered in the telephone directory can be called up, and the switching to the mail creation mode can be performed.

In this case, as the screen which can be switched to the new mail creation mode, in addition to the screen of the names and telephone numbers registered in the telephone directory as described above, the mail address screen can be also used so that the transition to the new mail creation mode can be effected, by pushing the warp key 8 while the mail address screen is indicated.

Fig. 4E shows an example of the "mail address screen" in which by pushing the warp key 8 in a state where the telephone directory is used to call up the counterpart person, the switching to the new mail creation mode can be effected. This can save a trouble of inputting each time the address to which the mail is dispatched, and creation and dispatch of the new mail can be simplified.

Further, it is possible to automatically register in the "new mail" the mail address in case where the mail address has been registered in the telephone directory, and the telephone number in case where the mail address has not been registered. In case where neither of the mail address nor the telephone number has been registered, the screen of the new mail creation mode will not be displayed even though the warp key 8 has been pushed.

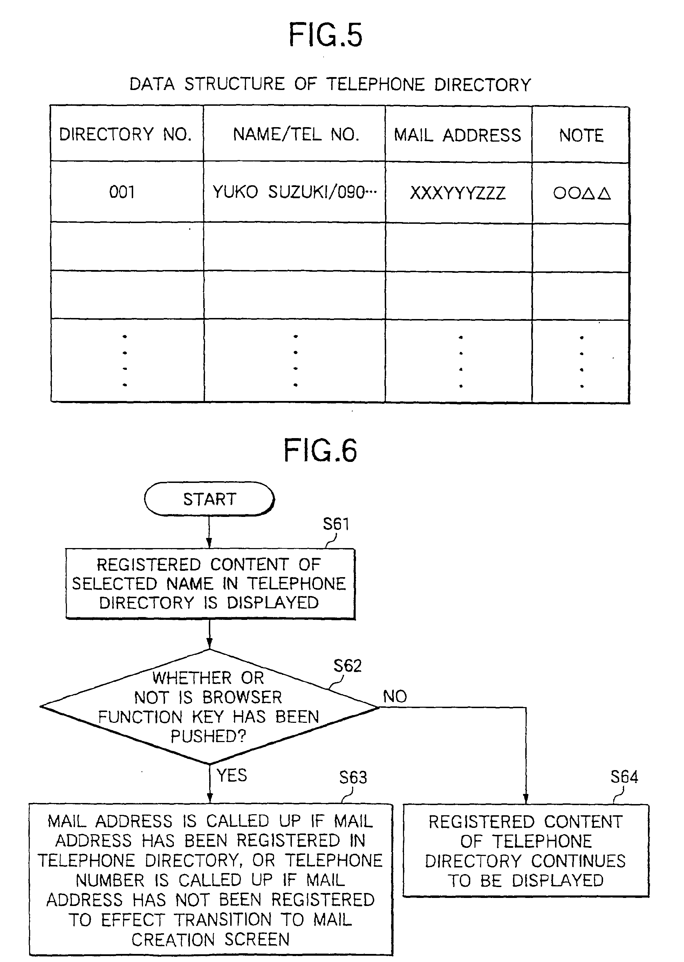

Fig. 5 shows a data structure of the telephone directory according to the embodiment. The telephone directory includes columns for list numbers, names/telephone numbers, mail addresses, and notes, as shown in Fig. 5. The desired data are previously registered in these data entry columns.

Fig. 6 is a flow chart for explaining operations for switching to the new mail creation mode by pushing the browser function key (warp key).

In Fig. 6, the registered content of the selected name in the telephone directory is displayed (Step 61). Then, whether or not the browser function key (the warp key) has been pushed is judged (Step 62). If the browser function key (the warp key) has been pushed, the mail address is called up in case where the mail address has been registered in the telephone directory, or the telephone number is called up in case where the mail address has not been registered to switch to the mail creation screen (Step 63). Alternatively, if the browser function key (the warp key) has not been pushed, the registered contents of the telephone directory shall be continued to be displayed (Step 64).

As described above, according to the invention, the mobile telephone comprises the telephone directory in which mail addresses can be registered, and the browser function key, in that by pushing the browser function key when the telephone directory screen is displayed by selecting the telephone directory, the switching to the mail creation mode can be conducted. With this structure, the invention can attain such an effect that the transition to the new mail creation mode can be quickly made through the other step besides the step of selecting the "mail" on the icon screen to display "the mail screen".

Further, the browser function key is the warp key adapted to switch to the non voice information communicating mode. With this structure, the invention can attain such an effect that the transition to the new mail creation mode can be made by simple key operations.

## Claims

1. A mobile telephone comprises:
a telephone directory in which electronic mail addresses is registered;
a browser function key which cause to switch to a mail creation mode by pushing said browser function key when an electronic mail address is displayed by selecting in said telephone directory.

2. A mobile telephone as claimed in claim 1, wherein said browser function key is a key to switch non voice information communicating mode.

3. A mobile telephone as claimed in claim 1, wherein when an electronic mail address of a destination has been registered in the telephone directory, the mail address is automatically registered as the "new mail" in the mail creation mode.

4. A mobile telephone as claimed in claim 1, wherein when a mail address of a destination has not been registered in the telephone directory, a telephone number of the destination is automatically registered as the "new mail" in the mail creation mode.

5. A mobile telephone as claimed in claim 3, wherein when neither of the mail address nor the telephone number has been registered, it is prohibited to switch to a mail creation mode by pushing said browser function key.

6. A mobile telephone as claimed in claim 4, wherein when neither of the mail address nor the telephone number has been registered, it is prohibited to switch to a mail creation mode by pushing said browser function key.
